# EUROPEAN PATENT APPLICATION

(11) **EP 1 953 722 A2**
(43) Date of publication of application: **06.08.2008**
(21) Application number: 08100907.8
(22) Date of filing: 24.01.2008
(51) Int. Cl.: G08B 25/01

(54) **Vehicle emergency communication device and a method for transmitting emergency textual data utilizing the vehicle emergency communication device**

(30) Priority: 30.01.2007 US 668928
(71) Applicant: Delphi Technologies, Inc., Troy, Michigan 48007 (US)
(72) Inventor: FAYYAD, Salem A., Grand Blanc, MI 48439 (US); SIGAL, Jacob R., Blacklick, OH 43004 (US); BALDINI, Massimo, Beverly Hills, MI 48025 (US)
(74) Representative: Denton, Michael John

(57) **Abstract**

A vehicle emergency communication device (12) and a method for transmitting emergency textual data utilizing the vehicle emergency communication device (12) are provided. The vehicle emergency communication device (12) includes a diagnostic link connector (42) configured to receive a signal indicating an emergency code associated with vehicle operation and a microprocessor (44) operably coupled to the diagnostic link connector (42). The microprocessor (44) is configured to determine emergency textual data based upon the emergency code and to induce the cellular phone transceiver (48) to transmit an RF signal having the emergency textual data for initiating an emergency phone call.

## Description

### TECHNICAL FIELD

This application relates to a vehicle emergency communication device and a method for transmitting emergency textual data utilizing the vehicle emergency communication device.

### BACKGROUND OF THE INVENTION

Vehicles have numerous vehicle subsystems including vehicle airbag subsystems and vehicle security subsystems. A drawback with the subsystems, however, lies in the fact that a vehicle operator must manually make a telephone call to an emergency operator requesting assistance with either the vehicle airbag subsystem or the vehicle security subsystem activated.

Accordingly, the inventors herein have recognized a need for a vehicle emergency communication device that automatically transmits emergency textual data when either a vehicle airbag module is activated or an invalid access code is input into a vehicle security keypad.

### SUMMARY OF THE INVENTION

A vehicle emergency communication device in accordance with an exemplary embodiment is provided. The vehicle emergency communication device includes a diagnostic link connector configured to receive a signal indicating an emergency code associated with vehicle operation. The vehicle emergency communication device further includes a microprocessor operably coupled to the diagnostic link connector. The microprocessor is configured to determine emergency textual data based upon the emergency code. The vehicle emergency communication device further includes a cellular phone transceiver operably coupled to the microprocessor. The microprocessor is further configured to induce the cellular phone transceiver to transmit an RF signal having the emergency textual data for initiating an emergency phone call.

A method for transmitting emergency textual data utilizing a vehicle emergency communication device in accordance with another exemplary embodiment is provided. The vehicle emergency communication device includes a diagnostic link connector, a cellular phone transceiver, and a microprocessor operably coupled to the diagnostic link connector and the cellular phone transceiver. The method includes receiving a signal having an emergency code at the diagnostic link connector. The method further includes sending the signal having the emergency code to the microprocessor. The method further includes determining the emergency textual data based on the emergency code, utilizing the microprocessor. The method further includes sending the emergency textual data to the cellular phone transceiver. The method further includes transmitting an RF signal having the emergency textual data for initiating an emergency phone call, utilizing the cellular phone transceiver.

### BRIEF DESCRIPTION OF THE DRAWINGS

Figure 1 is a schematic of a vehicle emergency communication system having a vehicle emergency communication device in accordance with an exemplary embodiment;
Figure 2 is a schematic of a display device utilized in the vehicle emergency communications system of Figure 1;
Figure 3 is a schematic of a database utilized in the vehicle emergency communication device of Figure 1; and
Figures 4-8 are flowcharts of a method for transmitting emergency textual data utilizing the vehicle emergency communication system of Figure 1 in accordance with another exemplary embodiment.

### DETAILED DESCRIPTION OF EXEMPLARY EMBODIMENTS

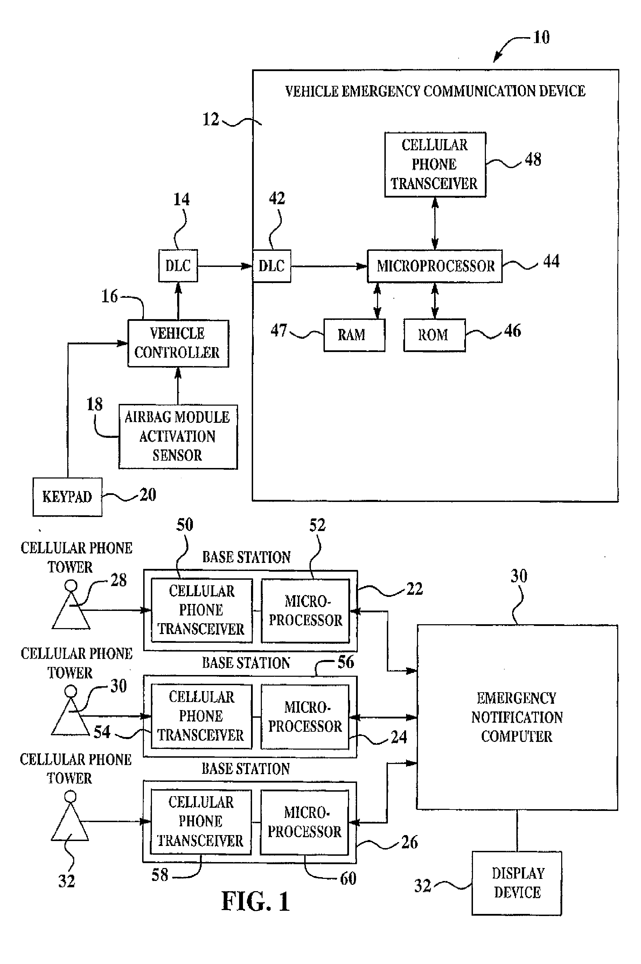

Referring to Figure 1, a vehicle emergency communication system 10 for initiating an emergency assistance phone call is shown. The vehicle emergency communication system 10 includes a vehicle emergency communication device 12, a diagnostic link connector 14, a vehicle controller 16, an airbag module activation sensor 18, a keypad 20, base stations 22, 24 and 26, cellular phone towers 28, 30 and 32, an emergency notification computer 30, and a display device 32.

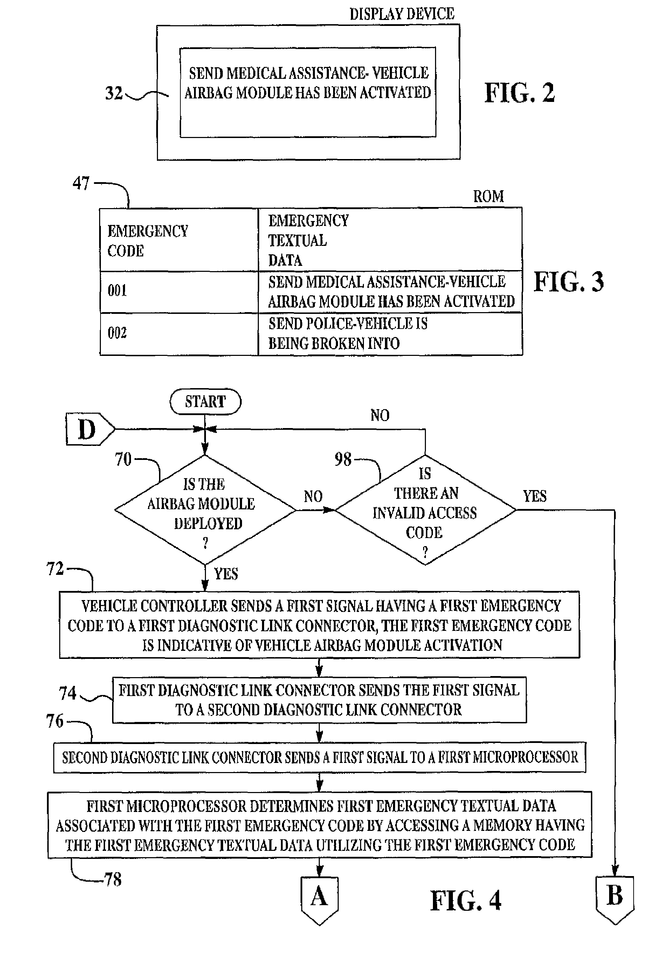

Referring to Figures 1 and 3, the vehicle emergency communication device 12 includes a diagnostic link connector 42 configured to receive a signal indicating an emergency code associated with vehicle operation. The vehicle emergency communication device 12 further includes a microprocessor 44 that is operably coupled to the diagnostic link connector 42. The microprocessor 44 is configured to determine emergency textual data based upon the emergency code. In particular, the microprocessor 44 determines the emergency textual data by accessing a memory 46 having the emergency textual data, utilizing the emergency code. As shown, the memory 46 has a table 47 stored therein. The table 47 has the following fields of information: (i) an emergency code field, and (ii) an emergency textual data field. In one exemplary embodiment, the table 47 has a record with an emergency code field of "001" and an emergency textual data field of "send medical assistance - vehicle airbag module has been activated." Further, the table 47 has another record with an emergency code of "002" and an emergency textual data field of "send police - vehicle is being broken into." Thus, for example, when a signal received by the microprocessor 44 has an emergency code of "001", the microprocessor 44 can access the record having the emergency code "001" utilizing the received emergency code "0001 as an index value, to obtain the emergency textual data "send medical assistance - vehicle airbag module has been activated."

Referring to Figure 1, the vehicle emergency communication device 12 further includes a cellular phone transceiver 48 operably coupled to the microprocessor 44. The microprocessor 44 is further configured to induce the cellular phone transceiver 48 to transmit an RF signal having the emergency textual data for initiating the emergency phone call. The microprocessor 44 is further operably coupled to a random access memory 47 utilized for temporarily storing data utilized by the microprocessor 44.

The diagnostic link connector 14 is configured to be operably coupled to the diagnostic link connector 42 of the vehicle emergency communication device 12. The diagnostic link connector 14 receives a signal having an emergency code from the vehicle controller 16 and routes the signal to the diagnostic link connector 42. The diagnostic link connector 42 further routes the signal to the microprocessor 44.

The vehicle controller 16 is provided to detect when either an airbag module has been activated indicating deployment of an inflatable cushion or an invalid access code has been entered in a vehicle security keypad 20. The keypad 20 is configured to allow a vehicle operator to gain access into an interior of the vehicle when a valid access code is entered utilizing the keypad 20. In particular, the vehicle controller 16 is configured to receive a signal from the airbag module activation sensor 18 indicating an airbag module has deployed an inflatable cushion and to generate a signal having an emergency code indicating airbag module activation that is sent to the diagnostic link connector 14. Further, the vehicle controller 16 is configured to receive a signal from the keypad 20 indicating an invalid access code entry and to generate a signal having an emergency code indicating an invalid access code entry that is sent to the diagnostic link connector 14.

The cellular phone towers 28, 30 and 32 are provided to receive RF signals from the cellular phone transceiver 48 in the vehicle emergency communication device 10. The cellular phone towers 28, 30, 32 are operably coupled to base stations 22, 24, 26 respectively. The base station 22 includes a cellular phone transceiver 50 operably coupled to a microprocessor 52. The base station 24 includes a cellular phone transceiver 54 operably coupled to a microprocessor 56. The base station 26 includes a cellular phone transceiver 58 operably coupled to a microprocessor 60. During operation, the cellular phone tower 28 routes a received RF signal from the transceiver 48 to the cellular phone transceiver 50. The cellular phone transceiver 50 obtains emergency textual data from the RF signal and routes a signal having the emergency textual data to the microprocessor 52. Thereafter, the microprocessor 52 routes a signal having the emergency textual data to the emergency notification computer 30. Similarly, during operation, the cellular phone tower 30 routes a received RF signal from the transceiver 48 to the cellular phone transceiver 54. The cellular phone transceiver 54 obtains emergency textual data from the RF signal and routes a signal having the emergency textual data to the microprocessor 56. Thereafter, the microprocessor 56 routes a signal having the emergency textual data to the emergency notification computer 30. Similarly, during operation, the cellular phone tower 32 routes a RF signal from the transceiver 48 to the cellular phone transceiver 58. The cellular phone transceiver 58 obtains emergency textual data from the RF signal and routes a signal having the emergency textual data to the microprocessor 60. Thereafter, the microprocessor 60 routes a signal having the emergency textual data to the emergency notification computer 30.

The emergency notification computer 30 is configured to receive signals having the emergency textual data from the base stations 22, 24 and 26. The emergency notification computer 30 is further configured to query the microprocessors 52, 56, 60 at the base stations 22, 24, 26 respectively, for signal strength values associated with the RF signals received by the cellular phone transceivers 50, 54, 58 respectively. The emergency notification computer 30 is further configured to triangulate the position of the vehicle based upon the signal strength values. The emergency notification computer 30 is further configured to display data indicating the emergency textual data and a position of the vehicle on the display device 32.

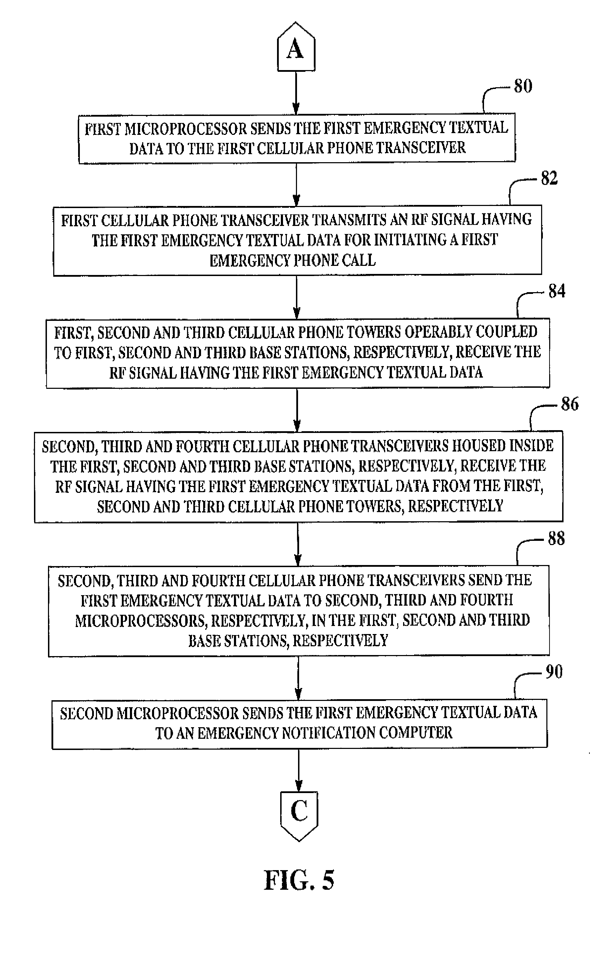

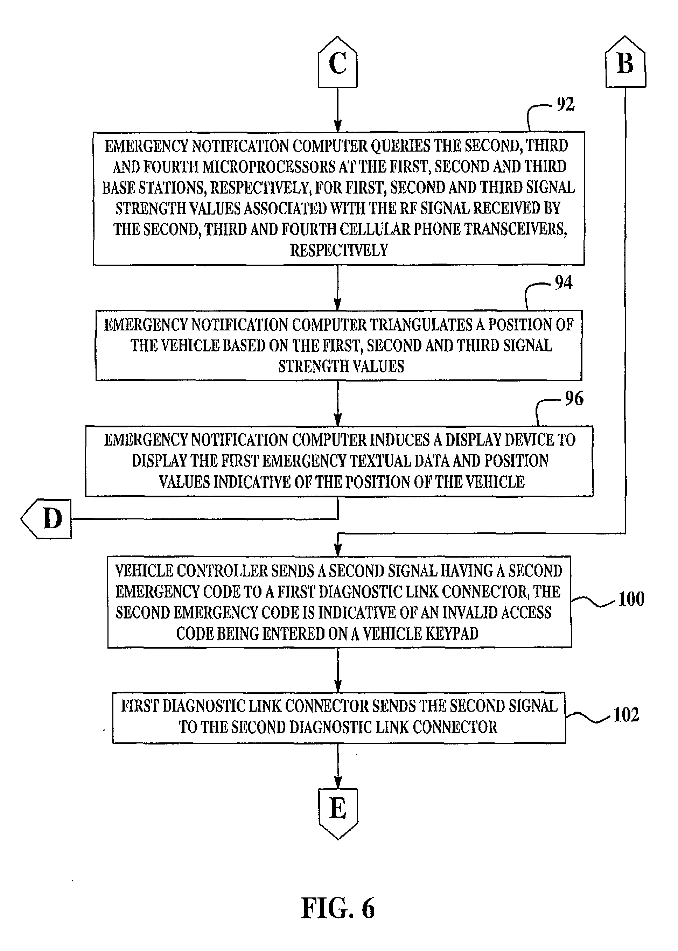

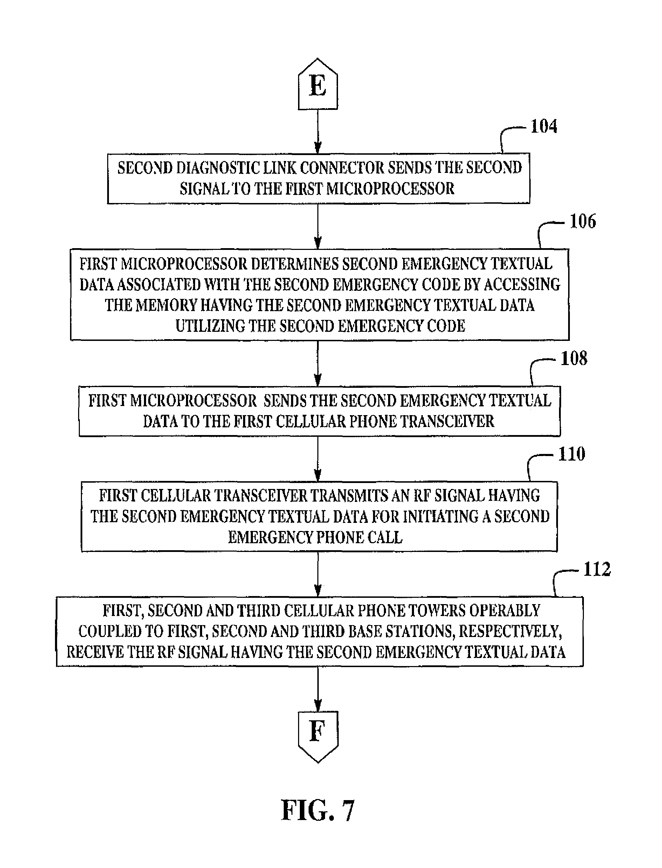

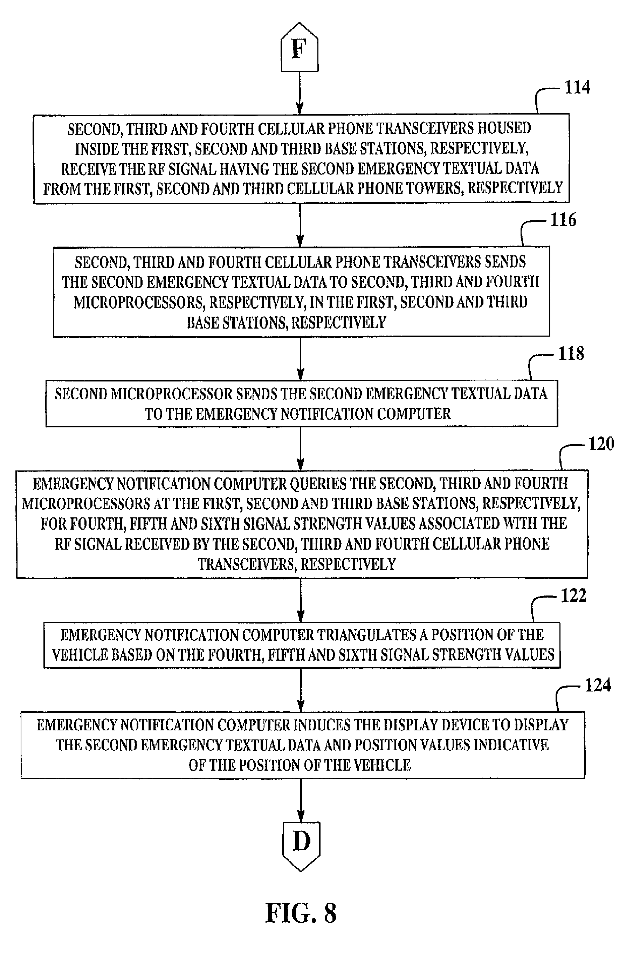

Referring to Figures 4-8, a method for transmitting emergency textual data utilizing the vehicle emergency communication device 12 in accordance with another exemplary embodiment will now be explained.

At step 70, the vehicle controller 16 makes a determination as to whether an airbag module in the vehicle has been activated. If the value of step 70 equals "yes", the method advances to step 72. Otherwise, the method advances to step 98.

At step 72, the vehicle controller 16 sends the first signal having the first emergency code to the diagnostic link connector 14. The first emergency code is indicative of vehicle airbag module activation.

At step 74, the diagnostic link connector 14 sends the first signal to the diagnostic link connector 42.

At step 76, the diagnostic link connector 42 sends the first signal to the microprocessor 44.

At step 78, the microprocessor 44 determines first emergency textual data associated with the first emergency code by accessing the memory 46 having the first emergency textual data, utilizing the first emergency code.

At step 80, the microprocessor 44 sends the first emergency textual data to the cellular phone transceiver 48.

At step 82, the cellular phone transceiver 48 transmits the RF signal having the first emergency textual data for initiating the first emergency phone call.

At step 84, the cellular phone towers 28, 30, 32 operably coupled to the base stations 22, 24, 26 respectively, receive the RF signal having the first emergency textual data.

At step 86, the cellular phone transceivers 50, 54, 58 housed inside the base stations 22, 24, 26 respectively, receive the RF signal having the first emergency textual data from the cellular phone towers 28, 30, 32 respectively. At step 88, the cellular phone transceivers 50, 54, 58 respectively, send the first emergency textual data to the microprocessors 52, 56, 60 respectively, in the base stations 22, 24, 26 respectively.

At step 90, the microprocessor 52 sends the first emergency textual data to the emergency notification computer 30.

At step 92, the emergency notification computer 30 queries the microprocessors 52, 56, 60 respectively, at the base stations 22, 24, 26 respectively, for first, second and third signal strength values associated with the RF signal received by the cellular phone transceivers 50, 54, 58 respectively.

At step 94, the emergency notification computer 30 triangulates a position of the vehicle based on the first, second and third signal strength values.

At step 96, the emergency notification computer 30 induces the display device 32 to display the first emergency textual data and position values indicative of the position of the vehicle. After step 96, the method returns to step 70.

Referring again to step 70, when the value of step 70 equals "no", the method advances to step 98. At step 98, the vehicle controller 16 makes a determination as to whether an invalid access code was input on the keypad 20. If the value of step 98 equals "yes", the method advances to step 100. Otherwise, the method returns to step 70.

At step 100, the vehicle controller 16 sends a second signal having a second emergency code to the diagnostic link connector 14. The second emergency code is indicative of an invalid access code being entered on the vehicle keypad 20.

At step 102, the diagnostic link connector 14 sends the second signal to the diagnostic link connector 42.

At step 104, the diagnostic link connector 42 sends the second signal to the microprocessor 44.

At step 106, the microprocessor 44 determines second emergency textual data associated with the second emergency code by accessing the memory 46 having the second emergency textual data, utilizing the second emergency code.

At step 108, the microprocessor 44 sends the second emergency textual data to the cellular phone transceiver 48.

At step 110, the cellular phone transceiver 48 transmits an RF signal having the second emergency textual data for initiating a second emergency phone call.

At step 112, the cellular phone towers 28, 30, 32 operably coupled to the base stations, 22, 24, 26 respectively, receive the RF signal having the second emergency textual data.

At step 114, the cellular phone transceivers 50, 54, 58 housed inside the base stations 22, 24, 26 respectively, receive the RF signal having the second emergency textual data from the cellular phone towers 28, 30, 32 respectively.

At step 116, the cellular phone transceivers 50, 54, 58 send the second emergency textual data to the microprocessors 52, 56, 60 respectively, in the base stations 22, 24, 26 respectively.

At step 118, the microprocessor 52 sends the second emergency textual data to the emergency notification computer 30.

At step 120, the emergency notification computer 30 queries the microprocessors 52, 56, 60 at the base stations 22, 24, 26 respectively, for fourth, fifth and sixth signal strength values associated with the RF signal received by the cellular phone transceivers 50, 54, 58 respectively.

At step 122, the emergency notification computer 30 triangulates a position of the vehicle based on the fourth, fifth and sixth signal strength values. At step 124, the emergency notification computer 30 induces the display device 32 to display the second emergency textual data and position values indicative of the position of the vehicle on the display device 32. After step 124, the method returns to step 70.

The vehicle emergency communication device and the method for transmitting emergency textual data represent a substantial advantage over other devices and methods. In particular, the vehicle emergency communication device and method provide a technical effect of transmitting emergency textual data for initiating an emergency phone call in response to an emergency code being received from a vehicle controller.

While the invention has been described with reference to exemplary embodiments, it will be understood by those skilled in the art that various changes may be made and equivalent elements may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed for carrying this invention, but that the invention will include all embodiments falling within the scope of the appended claims. Moreover, the use of the terms first, second, etc. do not denote any order or importance, but rather the terms first, second, etc. are used to distinguish one element from another. Further, the use of the terms a, an, etc. do not denote a limitation of quantity, but rather denote the presence of at least one of the referenced items.

## Claims

1. A vehicle emergency communication device (12), comprising:
a diagnostic link connector (42) configured to receive a signal indicating an emergency code associated with vehicle operation;
a microprocessor (44) operably coupled to the diagnostic link connector (42), the microprocessor (44) configured to determine emergency textual data based upon the emergency code; and
a cellular phone transceiver (48) operably coupled to the microprocessor (44), the microprocessor (44) being further configured to induce the cellular phone transceiver (48) to transmit an RF signal having the emergency textual data for initiating an emergency phone call.

2. The vehicle emergency communication device (12) as set forth in claim 1, wherein the microprocessor (44) is configured to determine the emergency textual data by accessing a memory (46) having the emergency textual data, utilizing the emergency code.

3. The vehicle emergency communication device (12) as set forth in claim 1, wherein the emergency code is indicative of vehicle airbag module activation.

4. The vehicle emergency communication device (12) as set forth in claim 1, wherein the emergency code is indicative of attempted access to a vehicle interior, utilizing an invalid access code on a vehicle keypad (20).

5. A method for transmitting emergency textual data utilizing a vehicle emergency communication device (12), the vehicle emergency communication device (12) having a diagnostic link connector (42), a cellular phone transceiver (48), and a microprocessor (44) operably coupled to the diagnostic link connector (42) and the cellular phone transceiver (48), the method comprising:
receiving a signal having an emergency code at the diagnostic link connector (42);
sending the signal having the emergency code to the microprocessor (44); determining the emergency textual data based on the emergency code, utilizing the microprocessor (44);
sending the emergency textual data to the cellular phone transceiver (48); and
transmitting an RF signal having the emergency textual data for initiating an emergency phone call, utilizing the cellular phone transceiver (48).

6. The method as set forth in claim 5, wherein determining the emergency textual data further comprises:
accessing a memory (46) having the emergency textual data based on the emergency code, utilizing the microprocessor (44).

7. The method as set forth in claim 5, wherein the emergency code is indicative of vehicle airbag module activation.

8. The method as set forth in claim 5, wherein the emergency code is indicative of attempted access to a vehicle interior, utilizing an invalid access code on a vehicle keypad (20).
